# EUROPEAN PATENT APPLICATION

(11) **EP 2 296 137 A1**
(43) Date of publication of application: **16.03.2011**
(21) Application number: 09169665.8
(22) Date of filing: 07.09.2009
(51) Int. Cl.: G09G 3/34, G02F 1/13357

(54) **Image display device and method of its operation**

(71) Applicant: NXP B.V., 5656 AE Eindhoven (NL)
(72) Inventor: Sedzin, Vladimirovich Aliaksei, 5656-AE, Eindhoven (NL); de Greef, Petrus Maria, 5656-AE, Eindhoven (NL)
(74) Representative: Krott, Michel

(57) **Abstract**

Power consumption by an image display device is reduced. The image display device is of a type that transmits light from a back light unit (4, 12) through an image display area of a light modulation panel (10). The intensity of the light supplied by the back light unit (4, 12) to the image display area is made position dependent according to a predetermined function that decreases from a centre of the display area towards a periphery of the image display area on mutually opposite sides of the centre. This may be done by varying the density the light sources (4) as a function of position from a centre of the image display area towards a periphery of the image display area. Position dependent compensation factors may be applied to pixel values defined by received image data, the position dependent compensation factors being selected to compensate at least partly for an effect of the density of light sources on light intensity as a function of position in the image display area.

## Description

### Field of the invention

The invention relates to an image display panel with backlighting and to backlighting for an image display panel.

### Background

A modulation type image display device comprises a backlight located behind a light modulation panel such as an LCD panel. The backlight is used to produce light that is transmitted in a position and time dependent way by the light modulation panel. The energy consumption of the image display device is determined mainly by the energy consumption of the backlight.

US patent application No 2006/0187233 describes adjustment of the brightness of a backlight to provide more efficient power usage. The brightness is adjusted to provide appropriate brightness based on ambient conditions, and/or to compensate for image intensity changes. The pixel control signals to the light modulation panel are modified accordingly, by changing the color look-up table of the graphics controller. By modifying the color intensity or luminance of each pixel, the amount of backlight necessary to create a display image of a particular display image quality can be modified accordingly. The pixel control signals can even be modified on a per-pixel basis to achieve greater luminance in some areas of the display image, while reducing the luminance in other areas of the display image.

The brightness transform is performed based on an ambient light level as determined by an ambient light sensor, or based on an image brightness profile of the image, which can be determined by analyzing the relative brightness of each pixel or groups of pixels. Changes in image brightness are combined with corresponding changes in backlight intensity so that a viewer of the image can perceive little or no difference between the original image and the image with the modified brightness. In this way, the energy consumption by the backlight can be reduced.

### Summary

Among others, it is an object to provide for reduction of energy consumption by the back light of the image display device.

A power saving method according to claim 1 is provided. Herein an intensity of the light supplied by the back light unit to the image display area is made position dependent according to a predetermined function that decreases from a centre of the display area towards a periphery of the image display area. This has been found to produce a better ratio between undesirable quality reduction and desirable reduction of power consumption than using the same reduction independent of position. This is especially advantageous for television sets.

The predetermined function is defined independent of the image that is displayed. In an embodiment, the predetermined function is realized by using a position dependent density of light sources, such as light emitting diodes, per unit area of image display area, the position dependent density decreasing from a centre of the image display area. A position dependent density of light sources implies that a distance between adjacent light sources increases with distance from the centre of the image display area, so that more light sources contribute to light intensity of a pixel at a position in the centre than to light intensity of pixels at positions further toward the periphery.

In a further embodiment pixel values of pixels away from the centre are adapted to raise transmission through the image display area to compensate at least partly for the reduced light intensity away from the centre. This may give rise to increased clipping of the pixel output towards the periphery, but this effect will be perceived less than clipping in the centre when viewers focus on the centre.

In another embodiment the driving currents of the light sources varies according a predetermined function of position away from the centre of the image display area. This may be used for example to create the same effect as use of a density of light sources that decreases from the centre toward the periphery according to the predetermined function.

In a further embodiment the predetermined function indirectly controls the decrease of backlight intensity toward the periphery, by using the function to adapt the pixel values defined by a received image signal and selection of the back light intensity according to minimum values for supporting the intensities needed for the adapted pixels (optionally allowing for a predetermined amount of clipping). In this case, the backlight intensity generally decreases toward the periphery, but with possible exceptions due image content.

In an embodiment the backlight intensity decreases at least in the direction of the largest of the width and height of the display screen (the horizontal direction in the case of a television set). The back light intensity may be constant in the other direction. In a further embodiment the back light intensity also decreases towards the periphery in the other direction.

### Brief description of the drawing

These and other objects and advantageous aspects will become apparent from a description of exemplary embodiments that refers to the following figures.
- Figure 1: shows a cross section of a display device
- Figure 2: shows a schematic front view of a back light
- Figure 2a: shows a plot of density versus position
- Figure 3: shows a display control circuit

### Detailed description of exemplary embodiments

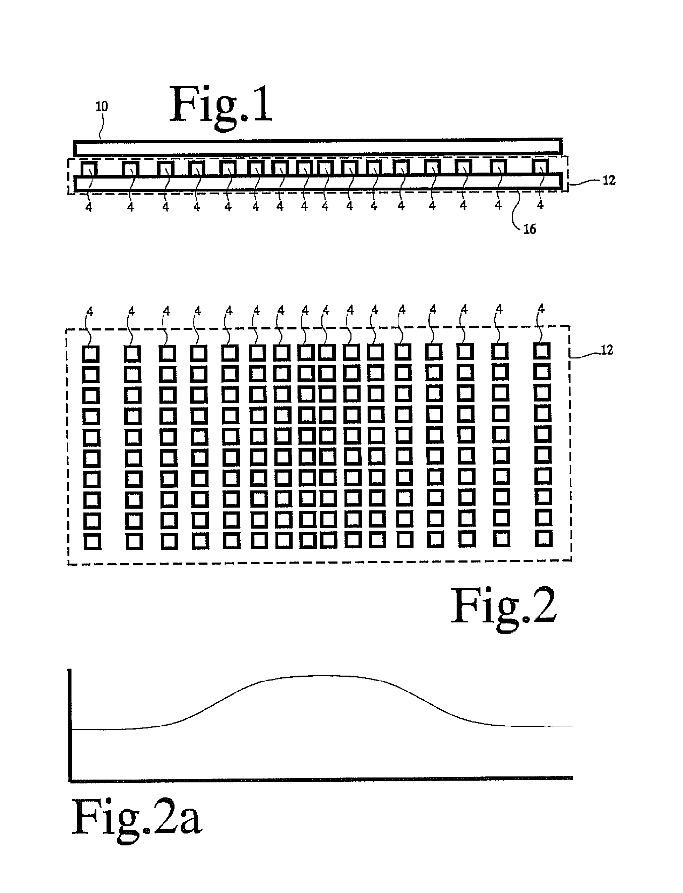

Figure 1 shows a cross-section of a display device, comprising a light modulation panel 10 and a backlight unit 12. Backlight unit 12 will be referred to as "backlight" and it comprises light sources 4 and a support panel 16 on which light sources 4 are mounted. Light sources 4 may be LEDs or groups of LEDs for example. Light modulation panel 10 is located in front of backlight 12, with light sources 4 between support panel 16 and light modulation panel 10. Light modulation panel 10 may be a panel with a matrix of LCD cells, which is known per se.

Figure 2 shows a schematic front view of backlight 12, with an array of the light sources 4. As shown, the density of light sources 4 is maximal at a central vertical line of the display and the density decreases with position towards the left and right from the central line. It should be emphasized that the positions of light sources 4 are shown schematically, to illustrate the decrease, rather than to illustrate the actual number of light sources or their actual positions. The density is preferably kept sufficiently high everywhere so that it does not give rise to "dark areas" on the image display surface, i.e. that the light intensity on the display surface does not vary more than a predetermined percentage (e.g. less than ten percent) between adjacent light sources.

In operation backlight 12 provides for a light intensity profile that has a maximum at the central line and decreases with position towards the left and right from the central line. By using less light intensity per unit display area towards the periphery less energy is required at a given light intensity at the centre than in the case where that light intensity is used in the centre and the periphery. It has been found that selective reduction of the maximum available image light intensity towards the periphery is experienced to reduce image quality less than a uniform light intensity reduction with the same amount of reduction of energy consumption. This may be because humans tend to focus on the central area of the image during video viewing and/or because perception of light from the central area is less perturbed by outside light from positions adjacent to the display.

It should be appreciated that the reduction of the density of light sources 4 towards the periphery of the backlight is only one way to provide for a reduction of light intensity towards the periphery. Alternatively, relatively more powerful light sources 4 may be used near the centre or larger drive currents may be applied to light sources 4 near the centre, compared to light sources 4 that are closer to the periphery. In each case, power consumption can be reduced.

Figure 2a shows a plot of the average density of the light sources 4 as a function of position from the centre of the display area towards the periphery, or of light intensity per unit area as a function of position. The density (or intensity per unit area) at the edge of the display area is half that at the centre of the display area. The value of the ratio between the density at the edge and the centre is chosen as a compromise between power saving and quality. Power consumption is lower when the ratio between density at the edge to density at the centre is lower. Quality is better when the ratio between density at the edge to density at the centre is higher. In other embodiments the ratio is preferably at most nine tenths and at least one tenth. Preferably a bell shaped density profile us used as shown, wherein the distance between successive light sources first increases at an increasing rate left and right from the center, and the rate of increase of the distance decreases beyond bending points to the left and right of the centre, before reaching the periphery.

Although an example has been shown wherein the light intensity per unit area as a function of position in the vertical direction is constant, it should be appreciated that in an embodiment the light intensity per unit area may decrease from the centre to the periphery also as a function of position in the vertical direction. When a rectangular display panel is used, having a width and height, decreasing intensity is used preferably at least in the direction of the greater one of the width and the height. This has the largest effect in terms of improved quality to power ratio.

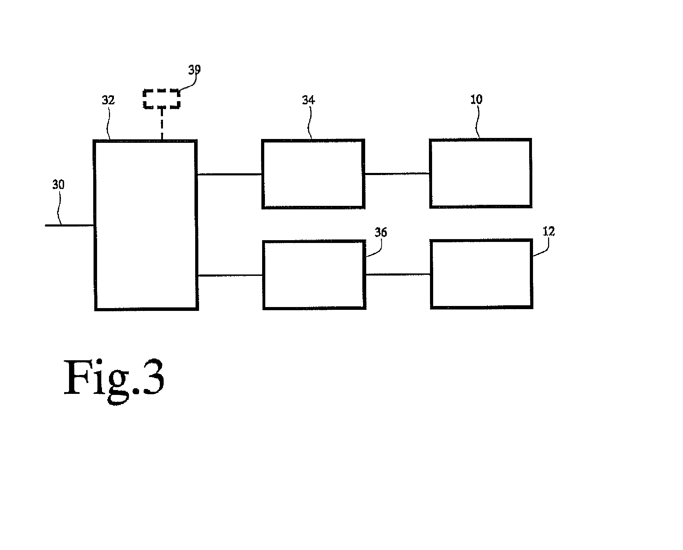

Figure 3 shows a display control circuit, comprising a signal input 30, a processing circuit 32, a pixel driver circuit 34 and a backlight driver circuit 36. An optional light detector 39 is shown coupled to processing circuit 32. Processing circuit 32 has an input coupled to signal input 30 and outputs coupled to pixel driver circuit 34 and optionally to backlight driver circuit 36. Pixel driver circuit 34 has outputs coupled to light modulation panel 10 (e.g. to cells of an LCD panel). Backlight driver circuit 36 has outputs coupled to light sources 4 of backlight 12.

In operation processing circuit 32 receives data that represents an image, for example as part of a video stream from signal input 30. Processing circuit 32 computes information that represents intensity values of pixel in the image from this data and sends the information to pixel driver circuit 34. In this respect processing circuit 32 may comprise a video decoder. Pixel driver circuit 34 drives pixels of light modulation panel 10 dependent on the information.

In an embodiment wherein light sources 4 of the same type are provided in backlight 12 with position dependent density, backlight driver circuit 36 may be configured to apply equal driving currents to all light sources 4. In an embodiment a predetermined current may be used.

In another embodiment, backlight driver circuit 36 sets the currents through different ones of the light sources 4 differently as a function of the position of the light source, to realize a position dependent light intensity from backlight 12, with an intensity that decreases from the centre to the periphery. Currents to light sources 4 closer to the periphery may be set lower than those to light sources 4 closer to the centre, or an increasing fraction of light sources may be left without current as a function of position toward the periphery.

Position dependent currents may be used also when backlight 12 has a position independent density of light sources 4. Both with and without variation of the density of light sources 4, power consumption is reduced in this way. The embodiment with decreasing density of light sources 4 towards the periphery has the additional advantage that fewer light sources 4 are needed. When the information that is used to control pixel driver circuit 34 is not adapted, the reduction of power consumption due to decreasing light intensity towards the periphery is traded for reduced quality in terms of less contrast in the periphery.

In an embodiment, processing circuit 32 may be configured to adapt the information that is used to control pixel driver circuit 34, in order to compensate at least partly for the variation of the backlight intensity as a function of position. The light intensity produced by the backlight as a function of pixel can be computed from the positions of light sources 4, their intensity setting and the angle dependence of the intensity of the light emitted by the light sources. The values of each may be changed in inverse proportion to the relative light intensity produced by the backlight at the position of the pixel, relative to the light intensity of the backlight at the centre of the display area. Thus, modified intensity values of pixel in the image are represented to pixel driver circuit 34. Clipping is used when the modified intensity values exceed the maximum possible control of pixels by light modulation panel 10.

This form of compensation may have the result that the fraction of pixel values that has to be clipped increases from the centre of the display area towards the periphery. Soft clipping may be used, wherein the information corresponds to the application of an S-shaped function that saturates at the maximum pixel control value to the original pixel value represented by the input data, multiplied by a factor that varies inversely proportionally to the light intensity per unit area of backlight 12 as a function of the position of the pixel.

In an embodiment the variation is partly compensated. In this embodiment, the variation of the factor may be reduced, for example by using a factor that varies in proportion to the light intensity per unit area of backlight 12 times a predetermined function of the position on the display screen, the function decreasing towards the periphery of the display area, form a maximum at the centre. In these embodiments the reduction of power consumption due to decreasing light intensity towards the periphery is at least partly traded for reduced quality in terms of increased clipping in the periphery.

In another embodiment the driving current for light sources 4 may be adapted dependent on image content and/or ambient light intensity. Processing circuit 32 may be configured to compute a required light intensity and to apply a signal to backlight driver circuit 36 to indicate the selected light intensity. In an embodiment, processing circuit 32 adapts back lighting by determining a maximum pixel intensity that is needed in an image, adjusting the back lighting intensity to a level just sufficient to realize this intensity and scaling the information that is supplied to pixel driver circuit 34 to compensate for the overall adjusted back lighting intensity.

The maximum needed pixel intensity may be computed by determining a maximum among values obtained by position dependent scaling of intensity values derived from the data that represents the image. In the determination of values among which the maximum is selected, a position dependent scaling factor may be used that varies in proportion to the density variation of light sources 4, decreasing from the centre of the image to its periphery. In an embodiment this scaling factor varies in proportion to the variation of the density of light sources 4, or according to a predetermined intensity profile that is used to control the position dependence of the currents to light sources 4.

In an embodiment the scaling factor of the information that is supplied to pixel driver circuit 34 to compensate for the overall adjusted back lighting intensity may be the same for pixels at all pixel locations. This form of scaling of pixel control should be distinguished from the scaling in the determination of the maximum, which does depend on position. The intensity values used in the selection of the maximum may be pixel values, or intensities derived for groups of pixels in image regions, e.g. values at a predetermined rank according to intensity in a region, or an average.

In further embodiment an image content dependent correction may be added to the position dependence of the light intensity from backlight 12. In this embodiment processing circuit 32 determines maximum needed pixel intensities for a plurality of sub-areas of the image among the values obtained by said position dependent scaling that decreases from the centre of the image to its periphery. Processing circuit 32 adjusts the control signals for the back lighting intensity for the respective sub-areas each to a respective level just sufficient to realize the respective maximum intensity. Processing circuit 32 scales the information that is supplied to pixel driver circuit 34 to control the pixels at different relative positions relative to the sub-areas so as to compensate for part of the adjustment of back lighting intensity, with a predetermined position dependent factor between said part and the adjustment of the back lighting intensity, the factor decreasing towards the periphery. In an embodiment wherein the density of light sources 4 is position dependent, the position dependence of this position dependent factor may correspond to the position dependence of the density of light sources. In another embodiment a predetermined position dependence factor may be used, to simulate a decrease of the density of light sources 4 towards the periphery.

In further implementations of these embodiments the display device may comprise one or more ambient light sensors 39 with outputs coupled to processing circuit 32, for supplying a signal that indicates a sensed light intensity. In this case processing circuit 32 may be configured to adapt the selected current dependent on the detected light intensity, for example to maintain a predetermined ratio between the intensity of light sources 4 and the detected ambient light intensity. In an embodiment, the ratio between back light intensity from light sources at the edge of the screen and in the centre may be controlled dependent on the sensed light intensity. Thus for example the intensity at the centre may be raised selectively in the case of high ambient intensity, or the intensity at the periphery may be raised selectively.

It should be appreciated that the method is particularly advantageous for motion video display, such as on a television set. In an embodiment processing circuit 32 provides for switching between a video mode and a monitor mode, a predetermined position dependence of the light intensity of back light 12 being used in the video mode but not in the monitor mode. Thus, the same image quality is used everywhere on the display screen in the monitor mode, to help users to focus on different sub-area of the image. In the video mode a predetermined fraction of light sources 4 may be switched off, the fraction increasing from the centre of the display screen towards its periphery. However, in an embodiment this may be used in all modes. Processing circuit 32 may be configured to support manual mode switching, based on control signals received on a control input (not shown) of processing circuit 32, or automatic mode switching, based for example on detection whether the displayed image has not changed during a predetermined time interval (e.g. a time interval of one second).

In an embodiment, a plurality of predetermined position dependent functions of intensity as a function of position on the image display area is provided for, which are predefined independent of image content. In this embodiment, processing circuit 32 may be configured to select between different ones of the functions based on a manual selection signal or a computation of statistics of properties of the displayed images. In this embodiment the selected predetermined position dependent function is used to control back light intensity as described in the preceding.

Although intensity variation has been described in general, it should be appreciated that the intensity variation may be applied to different spectral components. Red, green and blue LEDs may be used as light sources 4 for different color components. In an embodiment the same position dependent variation of the intensity as a function of position towards the periphery is used for all color components. Intensities for each color component may be computed together from one overall intensity for example. In another embodiment mutually different position dependent variations may be used for different color components. Intensities may be computed individually for different color components for example.

Processing circuit 32 may comprise a programmable computer and an instruction memory with a program of instructions to control the currents to light sources 4 and/or the information that represent pixel values, as described in the preceding. As used herein, statements that a circuit is configured to perform specified steps or functions mean that the circuit comprises such a programmable computer and program of instructions, or a dedicated circuit designed to implement execution of these steps or functions.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A power saving method of operating an image display device, the method comprising transmitting light from a back light unit (4, 12) through an image display area of a light modulation panel (10), distributed over the entire image display area, and modulating transmission of through said display area as a function of position on said display area, wherein an intensity of the light supplied by the back light unit (4, 12) to the image display area is made position dependent according to a predetermined function that decreases from a centre of the display area towards a periphery of the image display area on mutually opposite sides of the centre.

2. An image display device comprising a back light unit comprising light sources (4) arranged to transmit light through an image display area of the image display device, distributed over the entire image display area, wherein the light sources (4) are arranged with position dependent density of light sources per unit area of image display area, the position dependent density decreasing from a centre of the image display area towards a periphery of the image display area on mutually opposite sides of the centre.

3. An image display device according to claim 2, the device comprising a light modulation panel (10) in said image display area, and a display control circuit (32) with an input (30) for receiving image data and an output coupled to the light modulation panel (10) to supply control signals to control pixels of a displayed image, the display control circuit (32) being configured to select the control signals by applying position dependent compensation factors to pixel values defined by the received image data, the position dependent compensation factors being selected to compensate at least partly for an effect of the density of light sources on light intensity as a function of position in the image display area.

4. An image display device comprising a back light unit (10) comprising light sources (4) arranged to transmit light through a image display area of the image display device, distributed over the entire image display area, the device comprising a display control circuit (32) coupled to the light sources of the back light to supply currents to said light sources (4), the display control circuit (32) being configured to provide for currents that depend the position of the light sources to which the currents are supplied, according a predetermined function of the position, the function decreasing the currents from a centre of the image display area towards a periphery of the image display area on mutually opposite sides of the centre.

5. An image display device according to claim 4, comprising a light modulation panel (10) in said image display area, the display control circuit (32) having an input (30) for receiving image data and an output coupled to the light modulation panel (10) to supply control signals to control pixels of a displayed image, the display control circuit (32) being configured to determine adapted intensities defined by the received image data, adapted as a function of position according to said function, to select the currents to said light sources according to minimum currents needed to support the adapted intensities.

6. An image display device according to claim 1, wherein the image display area is rectangular, having a length and a width, the intensity variation being provided at least along a direction of a greater one of said length and width.

7. An image display device according to claim 1, wherein the intensity variation is provided along both the length and the direction of the width.

8. An image display device according to claim 1, wherein the light sources (4) are light emitting diodes.

9. An image display device according to claims 2 or 4, comprising a light sensor, coupled to the display control circuit (32), the display control circuit (32) being configured to control the light sources dependent on an output signal of the light sensor.
